# EUROPÄISCHE PATENTSCHRIFT

(11) **EP 3 234 389 B1**
(45) Veröffentlichungstag und Bekanntmachung des Hinweises auf die Patenterteilung: **04.09.2019**
(21) Anmeldenummer: 15805551.7
(22) Anmeldetag: 09.12.2015
(51) Int. Cl.: F16D 3/79, F16D 3/60

(54) **KUPPLUNGSELEMENT UND KUPPLUNGSANORDNUNG ZUR AXIALEN DREHMOMENTÜBERTRAGUNG, UND LAMELLENANORDNUNG FÜR SOLCHE**
CLUTCH ELEMENT AND CLUTCH ARRANGEMENT FOR THE AXIAL TRANSMISSION OF TORQUE, AND MULTIPLE DISC ARRANGEMENT THEREFOR
ÉLÉMENT D'ACCOUPLEMENT ET DISPOSITIF D'ACCOUPLEMENT POUR LA TRANSMISSION AXIALE DE COUPLE ET ENSEMBLE DE LAMELLES POUR DE TELS ÉLÉMENTS D'ACCOUPLEMENT

(30) Priorität: 19.12.2014 DE 102014019266
(43) Veröffentlichungstag der Anmeldung: 25.10.2017
(73) Patentinhaber: Rexnord GmbH, 57518 Betzdorf (DE)
(72) Erfinder: SOWA, Rudolf, 59399 Olfen (DE)
(74) Vertreter: V.O.
(86) Internationale Anmeldenummer: PCT/EP2015/079149
(87) Internationale Veröffentlichungsnummer: WO 2016/096576

(56) Entgegenhaltungen:
- EP-A1- 0 184 051
- DE-A1- 1 910 167
- DE-A1- 19 625 318
- US-A- 4 744 783
- US-A1- 2010 099 505

## Beschreibung

Die vorliegende Erfindung betrifft ein Kupplungselement zur axialen Drehmomentübertragung, mit wenigstens einem ersten und einem zweiten Anschlusselement zum Anschluss drehbarer Maschinenteile, beispielsweise von passiven oder aktiven Antriebswellen oder von Anschlusselementen weiterer Kupplungselemente, und einer axial zwischengeordneten federelastischen Lamellenanordnung, die über eine Mehrzahl an Befestigungsanordnungen abwechselnd mit dem ersten und zweiten Anschlusselement verbunden ist, so dass die Anschlusselemente drehsteif aber axial- und winkelbeweglich miteinander verbunden sind, wobei die Lamellenanordnung aus mehreren federelastischen Lamellen zusammengesetzt ist.

Darüber hinaus betrifft die Erfindung eine Lamellenanordnung zur Anwendung mit einem solchen Kupplungselement, und eine Kupplungsanordnung umfassend wenigstens zwei solcher Kupplungselemente.

Derartige Kupplungselemente und Kupplungsanordnungen sowie Lamellenanordnungen dafür sind aus dem Stand der Technik bekannt. Sie werden auch als Lamellenkupplungen bezeichnet, weil zwischen den jeweiligen Anschlusselementen zum Anschluss drehbarer Maschinenteile eine oder mehrere Lamellenelemente angeordnet sind, die insbesondere dem Axial- und Winkelausgleich dienen, Drehmomente jedoch mit geringen Verlusten zwischen den beiden Anschlusselementen und somit zwischen den beiden zu verbindenden Maschinenteilen übertragen. Die Kupplungen dienen primär dem Ausgleich von Winkel- und Axialungenauigkeiten in der Ausrichtung der beiden Anschlusselemente bzw. daran angeschlossene Maschinen relativ zueinander. Je steifer dabei die Lamellenanordnung ausgebildet ist, desto besser ist die Drehmomentübertragung, desto geringer ist jedoch die Toleranz beim Ausgleich der Winkel- und Axialungenauigkeiten.

Üblicherweise erfolgt die Verbindunganordnung wechselweise mit den umschließenden Anschlusselementen, das bedeutet beispielsweise, dass bei einer Lamellenanordnung mit vier Befestigungspunkten jeder gerade Befestigungspunkt beim ersten Anschlusselement festgelegt wird und jeder ungerade Befestigungspunkt beim zweiten Anschlusselement festgelegt wird. Dies setzt sich so bei Lamellenanordnungen mit mehr als vier Befestigungspunkten fort, wobei vorzugsweise jede Lamellenanordnung eine gerade Anzahl an Befestigungspunkten aufweist.

Durch die Kopplung mehrerer Kupplungselemente und vorzugsweise von zwei Kupplungselementen zu einer Kupplungsanordnung können auf diese Weise sehr verlässlich und mit hoher Ausrichtungstoleranz unterschiedliche Maschinenteile drehmomentsteif miteinander verbunden werden.

Generell gilt: Je höher die Leistungsdichte, die Drehzahl bzw. die Wechsellastzahl ist, der ein solches Kupplungselement ausgesetzt wird, desto höher sind die Ansprüche an die Spielfreiheit, die Toleranz und die Genauigkeit der Passung der miteinander verbundenen Bauteile. Je besserer Werte hier erzielt werden, desto höher ist ein Kupplungselement belastbar und desto effektiver und verlustfreier können Drehmomente übertragen werden.

Zur Verbindung der Lamellenanordnung mit den jeweiligen Anschlusselementen sind aus dem Stand der Technik unterschiedliche Ausführungsformen und Verfahren bekannt.

So ist es bekannt, die Anschlusselemente mit der Lamellenanordnung schlicht über Reibschlussverbindungen zu koppeln, indem z.B. Pressbolzen durch komplementäre Bohrungen in den Anschlusselementen und der Lamellenanordnung eingeführt und durch Konterelemente, beispielsweise Muttern, verspannt werden. Negativ ist bei einer solchen Ausführungsform jedoch das hohe Spiel zwischen Lamellenanordnung und Anschlusselement, so dass ein sehr reduzierter Wirkungsgrad bei der Drehmomentübertragung zu beobachten ist.

Die Lösung dieses Problems wird u. a. darin gesucht, dass anstelle einer Reibschlussverbindung eine Formschlussverbindung zwischen Lamellenanordnung und Anschlusselementen verwendet wird, indem beispielsweise ein Pressbolzen durch komplementäre Bohrungen der Lamellenanordnung und Anschlusselemente gepresst wird. Dies garantiert einen verbesserten Kraftschluss. Nachteilig bei einer solchen Ausführungsform ist jedoch, dass zum Einpressen des Pressbolzens eine definierte Relativ-Positionierung der Lamellenanordnung und der Anschlusselemente zueinander gegeben sein muss. Dies wird u.a. durch eine Fixierung der jeweiligen Elemente in einer Montagevorrichtung gewährleistet, wobei nach der Fixierung dann Bohrungen bzw. Ausnehmungen zum Einführen des Pressbolzens vorgesehen werden. Da hier die Passgenauigkeit der Bohrungen in der Lamellenanordnung und den Anschlusselementen relativ zueinander von entscheidender Bedeutung ist, darf vor dem Einsetzen des Pressbolzens in die Bohrung kein Lösen der Lamellenanordnung und der Anschlusselemente aus der Montagevorrichtung erfolgen. Das bedeutet, dass eine Vorfertigung und Lagerhaltung der einzelnen Bauteile nicht möglich ist. Es kann immer nur eine fixierte Zusammenstellung von Lamellenanordnungen und Anschlusselementen gebohrt und anschließend gleich mit dem Pressbolzen fixiert werden. Dies ist kosten- und zeitintensiv. Darüber hinaus hat sich herausgestellt, dass zum formschlüssigen Einpressen des Pressbolzens ein Schneidkopf am freien Ende des Pressbolzens vonnöten ist, dessen Herstellung ebenfalls teuer und zeitaufwändig ist. Bei fehlerhaftem Verpressen sind darüber hinaus die Anschlusselemente und/oder die Lamellenanordnungen bzw. deren einzelne Lamellen als Abfallprodukt zu entsorgen, da ein erneutes formschlüssiges Einpressen eines Pressbolzens nicht mehr möglich ist.

Um die kostenaufwändige Herstellung von Schneidköpfen an Pressbolzen zu umgehen, ist es auch bekannt, Pressbolzen so abzukühlen, dass sie aufgrund einer Querschnittsreduktion einfach in Bohrungen in den Lamellenanordnungen und Anschlusselementen eingepasst werden können. Nach dem Wieder-Aufwärmen der Pressbolzen stellt sich dann eine nahezu spielfreie Formschlussverbindung zwischen Lamellenanordnung und Anschlusselement ein. Der Nachteil hier jedoch ist der hohe Zeitaufwand für das Abkühlen und Aufwärmen der Pressbolzen und darüber hinaus auch wieder die unabdingbare Vorpositionierung von Anschlusselement und Lamellenanordnung in einer Montageanordnung, um eine spielfreie und genaue Anordnung der jeweiligen Bauteile untereinander zu garantieren. Ein weiterer Nachteil liegt darin, dass ein Zerlegen der Kupplungselemente bzw. Kupplungsanordnungen bei obigen Verfahren nicht oder nur mit hohem Aufwand und meist unter Austausch mehrerer Bauteile möglich ist.

Aus der US 5,944,611 ist ein Kupplungselement der eingangs genannten Art bekannt, bei der eine vorkonfektionierte Lamellenanordnung über Schraubverbindungen wechselseitig mit ersten und zweiten Anschlusselemente verbunden ist. Die Lammellenanordnung wird vorgefertigt als Paket über Bolzen and den Anschlusselementen festgelegt.

Ähnliches zeigt die DE 197 09 950. Auch hier wird zur Herstellung eines Kupplungselementes eine vorkonfektionierte Lamellenanordnung als Paket über Schraubverbindungen wechselseitig mit ersten und zweiten Anschlusselementen verbunden. Die Lamellenanordnung verfügt über eine Mehrzahl an Lamellen, die über eine aufgebördelte Spannhülse relativ zueinander in horizontaler Richtung fest fixiert sind.

Ein ähnliches Kupplungselement ist auch durch die WO 2014/140128 bekannt. Hier erfolgt die Festlegung einer als Paket vorkonfektionierten Lammellenanordnung, umfassend eine Mehrzahl an Lamellen, die über eine Spannhülse horizontal vor-ausgerichtet sind, über Bolzen, die zur Reduktion von Montagespiel zwischen Lamellenanordnung und Bolzen, ein Übermaß aufweisen, das sich beim Festlegen der Lammelanordnung infolge Querkontraktion der Bolzens reduziert.

Die DE 196 25 318 A1 offenbart eine Konusschraubverbindung für eine Lamellenpaket-Wellenkupplung, umfassend einen Spannbolzen und eine Spannbuchse, wobei der Sitz zwischen der Spannbuchse und dem Spannbolzen konisch ausgebildet ist. Die Spannbuchse trägt eine zweite Spannbuchse, die einen Kragen aufweist und in Verbindung mit einem Spannring das Lamellenpaket in axialer Richtung formschlüssig gegen einen Anschlussteil fixiert. Der Sitz zwischen den beiden Spannbuchsen ist zylindrisch ausgebildet. Eine axiale Vorspannung der Konusschraubverbindung führt zu einer axialen Festlegung des Lamellenpaketes und einer radialen Ausrichtung relativ zum Anschlussteil, wobei der Spannbolzen und die erste Spannbuchse einen ringförmigen Spalt bilden, dessen Breite proportional dem Aufziehmaß der Konusschraubverbindung ist.

Die DE 19 10 167 A1 offenbart eine Befestigungsanordnung für Bolzen in dünnen Wänden, mit einer in einer Axialrichtung in eine Öffnung in der Wand einsetzbaren, elastisch nachgiebigen Hülse, in die ein die Hülse aufweitender Bolzen einführbar ist. Die Hülse weist eine Ringnut auf, in die die Wandöffnung einrastet, wobei die Hülse mindestens in ihrem von der Vorderkante bis etwa zur Ringnut sich erstreckenden Bereich mit mindestens einem achsparallelen Schlitz zur Erzielung der elastischen Nachgiebigkeit versehen ist.

Die Sämtliche aus dem Stand der Technik bekannte Kupplungselemente weißen den Nachteil auf, dass eine Anpassung der Lamellenanordnungen nur unter hohem Aufwand möglich ist.

Aufgabe der vorliegenden Erfindung ist es folglich, eine Kupplungsanordnung und ein Kupplungselement anzubieten, das kostengünstig und schneller, als es aus dem Stand der Technik bekannt ist, hergestellt werden kann.

Diese Aufgabe wird durch ein Kupplungselement gemäß Patentanspruch 1, eine Kupplungsanordnung gemäß Patentanspruch 13 und eine Lamellenanordnung für eine solche gemäß Patentanspruch 14 gelöst.

Insbesondere wird diese Aufgabe gelöst durch ein Kupplungselement zur axialen Drehmomentübertragung, mit wenigstens einem ersten und einem zweiten Anschlusselement zum Anschluss drehbarer Maschinenteile, beispielsweise von passiven und aktiven Antriebswellen oder von Anschlusselementen weiterer Kupplungselemente, und einer axial zwischengeordneten federelastischen Lamellenanordnung, die über eine Mehrzahl an Befestigungsanordnungen abwechselnd mit dem ersten und zweiten Anschlusselement verbunden ist, so dass die Anschlusselemente drehsteif aber axial- und winkelbeweglich miteinander verbunden sind, wobei die Lamellenanordnung aus mehreren federelastischen Lamellen zusammengesetzt ist, wobei wenigstens eine Befestigungsanordnung eine vorzugsweise elastische Schlitzzentrierhülse umfasst, die unter elastischem Formschluss und/oder vorzugsweise elastischem Spiel in komplementäre Bohrungen in einem der beiden Anschlusselemente und in der Lamellenanordnung unter Vorzentrierung des Anschlusselements relativ zur Lamellenanordnung und unter Vorzentrierung der einzelnen Lamellen relativ zueinander eingeführt ist, und weiter einen Schraubzentrierbolzen umfasst, der in die Schlitzzentrierhülse unter Festlegung und Endzentrierung des Anschlusselementes relativ zur Lamellenanordnung eingeschraubt ist.

Darüber hinaus wird diese Aufgabe gelöst durch eine Kupplungsanordnung umfassen wenigstens zwei solcher Kupplungselemente, wie sie hier und im Folgenden beschrieben sind, und die über wenigstens jeweils eines ihrer Anschlusselemente, vorzugsweise unter Zwischenschaltung eines Zwischenelementes, miteinander kraftgekoppelt sind.

Schließlich wird diese Erfindung auch gelöst durch eine Lamellenanordnung zur Anwendung mit einem solchen Kupplungselement bzw. einer solchen Kupplungsanordnung, wie sie hier und im Folgenden beschrieben sind, umfassend eine Mehrzahl an federelastischen Lamellen und eine Mehrzahl an Schlitzzentrierhülsen, die unter elastischem Formschluss und insbesondere mit elastischem Spiel in Bohrungen in der Lamelle unter Vorzentrierung der einzelnen Lamellen relativ zueinander eingeführt oder einführbar sind.

"Elastischer Formschluss" bedeutet, wie im Folgenden auch noch im Detail erläutert, dass die Schlitzzentrierhülse, derart ausgebildet ist, dass sie ohne den eingeschraubten Zentrierbolzen mit einem durch äußere Krafteinwirkung reduzierten Durchmesser, vorzugsweise also unter Vorspannung, um diesen reduzierten Durchmesser zu erhalten, in wenigstens eine Bohrung des Anschlusselementes und/oder der Lammelanordnung gelagert bzw. eingeführt werden kann, wobei nach Entfernen der Vorspannung bzw. der äußeren Krafteinwirkung eine elastische Aufweitung der Hülse erfolgt, so dass diese wenigstens abschnittsweise gegen wenigstens eine der Bohrungen drängt. Es bildet sich so der Formschluss mit wenigstens einer Bohrung, vorzugsweise der Bohrung im Anschlusselement aus. "Vorzugsweise elastisches Spiel" bedeutet, wie im Folgenden auch noch im Detail erläutert, dass die Schlitzzentrierhülse derart ausgebildet ist, dass sie ohne den eingeschraubten Zentrierbolzen mit Spiel in wenigstens einer Bohrung des Anschlusselementes und/oder der Lammelanordnung gelagert ist bzw. eingeführt werden kann. Durch das Einschrauben des Schraubzentrierbolzens erfolgen dann eine Aufweitung und so die Endzentrierung. Diese Aufweitung ist vorzugsweise elastisch. Je nach Ausführungsform ist es möglich die Schlitzzentrierhülse (vor dem Einführen des Schraubzentrierbolzens) im Anschlusselement und der Lammellenanordnung unter elastischem Formschluss zu lagern bzw. einzuführen, oder aber unter Spiel, vorzugsweise elastischem Spiel zu lagern oder einzuführen oder aber im Anschlusselement mit elastischem Formschluss und in der Lammellenanordnung mit Spiel, vorzugsweise elastischem Spiel zu lagern bzw. einzuführen, oder umgekehrt. Die "Festlegung und Endzentrierung" erfolgt vorzugsweise durch eine Durchmesservergrößerung der Schlitzzentrierhülse während des Einschraubens des Schraubzentrierbolzens.

Üblicherweise erfolgt die Verbindunganordnung der Lammellenanordnung wechselweise mit den Anschlusselementen, das bedeutet beispielsweise, dass bei einer Lamellenanordnung mit vier Befestigungspunkten jeder gerade Befestigungspunkt am ersten Anschlusselement festgelegt wird und jeder ungerade Befestigungspunkt am zweiten Anschlusselement festgelegt wird. Dies setzt sich so bei Lamellenanordnungen mit mehr als vier Befestigungspunkten fort, wobei vorzugsweise jede Lamellenanordnung eine gerade Anzahl an Befestigungspunkten aufweist. Unter "abwechselnd verbunden" wird hier auch eine Anordnung mit davon abweichender Konfiguration verstanden, solange die Anbindung der Lammellenanordnung teilweise am ersten und teilweise am zweiten Anschlusselement erfolgt, so dass die Anschlusselemente drehsteif aber axial- und winkelbeweglich miteinander verbunden sind.

Ein wesentlicher Punkt der Erfindung ist die Bereitstellung einer vorzugsweise elastisch verformbaren Schlitzzentrierhülse als Teil der Befestigungsanordnung und die Festlegung der Lamellenanordnung am jeweiligen Anschlusselement unter Zuhilfenahme derselben. Vorzugsweise wird unter verformbar verstanden, dass der Querschnittsdurchmesser der Hülse veränderbar und insbesondere vergrößerbar und reduzierbar ausgebildet ist. Vorzugsweise wird unter elastisch verformbar verstanden, dass der Querschnittsdurchmesser der Hülse elastisch veränderbar und insbesondere elastisch vergrößerbar und reduzierbar ausgebildet ist. Durch die elastische Ausführung der Schlitzzentrierhülse kann z.B. der Querschnitt der Schlitzzentrierhülse elastisch so reduziert werden, dass ein vorzugsweise zwängungsfreies Einführen der Schlitzzentrierhülse in entsprechende Bohrungen des Anschlusselementes und der Lamellenanordnung möglich ist. Durch die so elastische Schlitzzentrierhülse kann beispielsweise eine Vorspannung vorzugsweise in Form einer Radialkraft auf wenigstens einen Teil der Bohrungen aufgebracht werden, die zu einer Vorzentrierung der Lamellenanordnung relativ zum Anschlusselement führt.

Unter Bohrung wird im Umfang der Erfindung jede Öffnung im Anschlusselement und/oder der Lamellenanordnung verstanden, die dem Einführen der Schlitzzentrierhülse dient. Bohrungen werden dazu üblicherweise mit Fräs-, Bohr-, Spindel- oder dergleichen abtragenden Verfahren hergestellt. Hier sind sämtliche aus dem Stand der Technik bekannten Verfahren anwendbar.

Durch das Einführen der vorzugsweise elastischen Schlitzzentrierhülse in die Lamellenanordnung bzw. die Anschlusselemente können auch vorgefertigte Anschlusselement und/oder vorgefertigt Lamellenanordnung bzw. Einzelkomponenten davon, wie beispielsweise Lamellen, verwendet und einfach relativ zueinander in Ausrichtung gebracht werden. Es ist also nicht mehr nötig, Anschlusselemente und Lamellenanordnung in Montagevorrichtungen zu verspannen, dann eine Bohrung einzuführen und anschließend miteinander zu verbinden ohne vorher die Montagevorrichtungen zu öffnen. Dies reduziert die Montagekosten und vor allem die Montagezeit um ein Erhebliches, da eine Vorfertigung der Anschlusselemente und der Lamellenanordnung möglich ist.

Die Anschlusselemente sind vorzugsweise solche Elemente, die dem Anschluss unterschiedlicher Maschinenteile dienen. Hier sind also sowohl Motoren und deren entsprechende Bauteile als auch Bauteile von anderen Maschinen bzw. Bauteile von weiterführenden Kupplungselementen oder dergleichen Elemente denkbar. Im Prinzip dient das Kupplungselement so dem Anschluss zweier Maschinenteile, die vorzugsweise unter axial und im Winkel zueinander abweichend positioniert sind. Die in die Bohrung eingeführte Schlitzzentrierhülse dient vorzugsweise als Formschlusselement, die die Relativausrichtung zwischen Anschlusselement und Lamellenanordnung, beispielsweise beim Einführen des Schraubzentrierbolzens korrigiert und auf eine Sollpassung bzw. ein Vor-Sollpassung ausrichtet.

Die Schlitzzentrierhülse kann dabei so ausgeführt sein, dass sie durch eine Zusatzeinrichtung elastisch im Durchmesser reduziert und so im Wesentlichen spielfrei in die Bohrungen eingeführt werden kann. Es erfolgt eine Reduzierung des Durchmessers durch eine äußere Krafteinwirkung. Nach dem Einführen wird die Zusatzeinrichtung entfernt und die Vorzentrierung durch das elastische Ausweiten der Schlitzzentrierhülse erreicht. Es bildet sich so ein elastischer Formschluss aus. Es ist aber auch möglich, die Schlitzzentrierhülse so auszuführen, dass sie in einem Einsetzzustand, also dem Zustand, in dem sie in die Bohrungen eingeführt ist, einen geringfügig geringeren Durchmesser als die Bohrungen aufweist, so dass sie mit geringstem Spiel und ohne Eigen-Vorspannung, aber unter gröberer Vorzentrierung der Anschlusselemente und Lamellenanordnungen eingeführt werden kann. Es bildet sich ein Spiel aus; die Hülse kann dann vorzugsweise elastisch aufgeweitet werden um eine Endzentrierung zu erzielen. Eine Vorspannung für diese Endzentrierung wird vorzugsweise erst beim Einführen des Schraubzentrierbolzens aufgebracht. Schließlich ist es möglich, die Schlitzzentrierhülse so auszuführen, dass sie einen etwas größeren Durchmesser aufweist als die Bohrungen von Anschlusselement und/oder Lamellenanordnung und erst während des Einführvorganges, vorzugsweise unter Zuhilfenahme eines daran vorgesehenen Reduktionsspreizkopfes am freien Ende der Schlitzzentrierhülse oder einer Reduktionskopfaufnahme an wenigstens einer der Bohrungen im Durchmesser reduziert und so unter Eigen-Vorspannung in die Bohrungen eingeführt werden kann. Auch hier erfolgt eine Reduzierung des Durchmessers durch eine äußere Krafteinwirkung, nämlich das Einführen in "die zu enge" Bohrung. Je nach Ausführungsform des Schlitzes, des Materials der Schlitzzentrierhülse, der relativen Durchmesser von Schlitzzentrierhülse und Bohrungen bzw. des Materials von Anschlusselementen und Lamellenanordnung kommt es so zu einer mehr oder weniger großen Vorzentrierung, Vorspannung und Fixierung der Schlitzzentrierhülse in den Bohrungen mit vorzugsweise elastischem Formschluss.

Vorzugsweise ist vorgesehen, dass die Schlitzzentrierhülse und der Schraubzentrierbolzen derart ausgebildet sind, dass die Schlitzzentrierhülse beim Einschrauben des Schraubzentrierbolzens aufgeweitet wird. Auf diese Weise ist eine Festlegung und Endzentrierung zwischen Lamellenanordnung und Anschlusselementen sichergestellt. Unter Einschrauben werden hier auch andere Arten des Formschlüssigen Einführens verstanden, beispielsweise Rastverbindungen etc.

Insbesondere in diesem Zusammenhang ist vorzugsweise die Schlitzzentrierhülse und der Schraubzentrierbolzen derart ausgebildet, dass in einem Einschraubzustand, in den der Schraubzentrierbolzen eingeschraubt ist, der Schraubzentrierbolzen endzentriert unter Formschluss in den Bohrungen festgelegt ist und so die Lamellenanordnung relativ zum jeweiligen Anschlusselement fixiert.

Die Schlitzzentrierhülse ist dabei vorzugsweise derart elastisch ausgebildet, das auch die Aufweitung elastisch ist. Das bedeutet, dass die Hülse nach dem Entfernen des Schraubzentrierbolzens wieder entfernt werden kann.

Vorzugsweise wird das Aufweiten und Festlegen der Schlitzzentrierhülse durch eine Gewindegangpressung zwischen Schraubzentrierbolzen und Schlitzzentrierhülse realisiert. Mit anderen Worten ist also vorzugsweise die Schlitzzentrierhülse und der Schraubzentrierbolzen derart ausgebildet, dass die Schlitzzentrierhülse beim Einschrauben des Schraubzentrierbolzens durch die Gewindegangpressung elastisch aufgeweitet wird und/oder in einem Einschraubzustand, in dem der Gewindebolzen eingeschraubt ist, endzentriert unter Formschluss in den Bohrungen festgelegt ist, und so die Lamellenanordnung relativ zum jeweiligen Anschlusselement fixiert.

Die Schlitzzentrierhülse weist dazu vorzugsweise ein Gewinde auf, das mit einem Gewinde am Zentriergewindebolzen kongruiert und eine radial Kraft so in die Schlitzzentrierhülse einbringt, dass es vorzugsweise zu einer radialen Aufweitung und somit einer Querschnittsänderung der Schlitzzentrierhülse kommt.

Die Lamellenanordnung ist vorzugsweise aus einer oder mehreren vorzugsweise federelastischen Lamellen zusammengesetzt bzw. zusammensetzbar, wobei die Schlitzzentrierhülse vorzugsweise unter elastischem Formschluss und/oder mit elastischem Spiel in Bohrungen der Lamellen unter Vorzentrierung der einzelnen Lamellen relativ zueinander und/oder relativ zum Anschlusselement einführbar ist. Das bedeutet, dass einzelne vorgefertigte federelastische Lamellen vorzugsweise über die Schlitzzentrierhülse übergestülpt und so relativ zueinander zentriert werden können. Das so gebildete Paket aus Lamellen bzw. die so gebildete Lamellenanordnung kann dann auf das Anschlusselement aufgesteckt bzw. damit gekoppelt werden und so relativ zum Anschlusselement vorzentriert und anschließend durch das Einschrauben des Schraubzentrierbolzens festgelegt und endzentriert werden. Unter elastischem Formschluss wird hier ein Zustand verstanden, bei dem die Schlitzzentrierhülse durch eine Vorreduktion im Durchmesser nach oder beim Einführen, eine Vorspannung auf wenigstens eine Lamelle mit der kleinsten Bohrung aufbringt. Unter vorzugsweise elastischem Spiel wird ein Spiel verstanden, das beispielsweise durch Bereitstellen des Querschnittdurchmessers der Schlitzzentrierhülse auf einen Durchmesser geringfügig kleiner als der der kleinsten Bohrung in Lammellenanordnung und Anschlusselemente erzielt wird. Auf diese Weise kommt es zu einer relativen Vorzentrierung der einzelnen Elemente, in denen die Bohrungen eingebracht sind. Anschließend kann durch den Schraubzentrierbolzen ein Aufweiten der Hülse mit resultierender Endzentrierung verursacht werden. Bei Vorhandensein des elastischen Formschlusses wird also die Hülse auch vorzugsweise ohne eingesetzten Schraubzentrierbolzen gegen die Wandungen der Bohrungen der Lamellen und/oder der Anschlusselemente gedrängt.

Vorzugsweise ist die Lamellenanordnung über die Schlitzzentrierhülse als eigenständiges Bauteil am Anschlusselement anordbar. Das bedeutet, dass die Lamellenanordnung also unter Zuhilfenahme der eingesetzten Schlitzzentrierhülse als Paket auf Vorrat gehalten und dann mit dem jeweils erforderlichen Anschlusselement verbunden werden kann. Auch ist es möglich, einzelne Lamellen der Lamellensubanordnungen bei Bedarf zur Lamellenanordnung zu komplettieren und über die eingesetzten Schlitzzentrierhülsen miteinander zu verbinden und/oder vorzujustieren. Auch ist es möglich, die Schlitzzentrierhülse so auszubilden, dass bereits eine nahezu endgültige Zentrierung der einzelnen Lamellen relativ zueinander erfolgt.

Vorzugsweise umfasst die Schlitzzentrierhülse einen Flansch, insbesondere an einem freien Endbereich der Hülse. Über diesen Flansch kann in wenigstens einer Richtung eine Festlegung der Schlitzzentrierhülse am Anschlusselement und/oder der Lamellenanordnung erfolgen. Ist beispielsweise der Flansch größer als die Bohrung, kann die Schlitzzentrierhülse von einer Seite in die Bohrung eingeführt und von der anderen Seite gegen diesen Flansch, und vorzugsweise durch das Einschrauben oder dergleichen Einbringen des Schraubzentrierbolzens, festgelegt werden. Insofern erfolgt dann also nicht nur ein Formschluss, sondern auch eine Presspassung der einzelnen Bauteile untereinander.

Vorzugsweise ist die Befestigungsanordnung und insbesondere die Schlitzzentrierhülse und der eingeschraubte Schraubzentrierbolzen so ausgebildet, dass eine Festlegung der Lamellenanordnung am Anschlusselement nahezu ausschließlich über Formschluss und nicht oder nur geringfügig über Reibschluss bzw. eine Pressung der einzelnen Bauteile, also der Lamellenanordnung und der Anschlusselemente relativ zueinander erfolgt. Vorzugsweise liegt hier das Verhältnis der Kraftübertragung per Presspassung und Formpassung bei < 1/10, vorzugsweise <1/30 und besonders bevorzugst bei <1/50.

Vorzugsweise weist die Schlitzzentrierhülse ein Innengewinde auf, das sich vorzugsweise im Wesentlichen über mehr als die Hälfte der Länge und besonders bevorzugst vollständig über die gesamte Länge der Schlitzzentrierhülse erstreckt. Dieses Innengewinde ist derart ausgebildet, dass ein Einschrauben des Schraubzentrierbolzens möglich ist. Vorzugsweise ist die Schlitzzentrierhülse so ausgebildet, dass deren Innendurchmesser im Bereich des Innengewindes geringer ist als der Durchmesser des Schraubzentrierbolzens. Auf diese Weise kommt es beim Einschrauben des Schraubzentrierbolzens zu einem elastischen Aufweiten der Schlitzzentrierhülse. Diese elastische Schlitzzentrierhülse garantiert das Endzentrieren der Lamellenanordnung, der einzelnen Lamellen und der Anschlusselemente relativ zueinander als auch eine sichere Festlegung des eingeschraubten Schraubzentrierbolzens, der durch des elastische Aufweiten stets unter Vorspannung gehalten ist. Vorzugsweise wir das Aufweiten durch die Gewindegangpressung zwischen Innengewinde der Hülse und Außengewinde des Bolzens initiiert. Vorzugsweise ist also insbesondere kein Spreizkegel oder dergleichen Aufweitelement außer dem Gewinde vorgesehen.

Die Schlitzzentrierhülse umfasst vorzugsweise wenigstens einen Schlitz, der sich von einem freien Ende der Hülse entlang ihrer Mantelfläche und vorzugsweise bis zu einem gegenüberliegenden freien Ende erstreckt. Dieser Schlitz erlaubt das einfache Aufweiten der Schlitzzentrierhülse bzw. das Reduzieren des Schlitzzentrierhülsendurchmessers, wenn dies gefordert ist.

Wie bereits zuvor beschrieben, weist die Schlitzzentrierhülse in einem Pre-Einsetzzustand, in dem sie also noch nicht in die Bohrung des Anschlusselementes und/oder der Lamellenanordnung eingesetzt ist, vorzugsweise einen geringfügig größeren Durchmesser auf als die jeweilige Bohrung bzw. als die kleinste vorhandene Bohrung und/oder ist die Schlitzzentrierhülse elastisch auf einen geringeren Durchmesser als den wenigstens einer der Bohrungen und insbesondere den kleinsten der Bohrungen verformbar. Auf diese Weise kann ein leichtes und sicheres Einsetzen der Schlitzzentrierhülse in die jeweiligen Bohrungen und eine Festlegung der Hülse der Bohrung auch ohne Bolzen garantiert werden. Darüber hinaus ist eine Vorzentrierung aufgrund der auf die Bohrungen einwirkenden Vorspannungen, sichergestellt.

Vorzugsweise weist die Schlitzzentrierhülse wenigstens teilweise einen Abschnitt mit einem definierten Oberflächenreibwert auf. Dieser definierte Oberflächenreibwert ermöglicht die genaue Anpassung der Schlitzzentrierhülse derart, dass sie beispielsweise nach dem Einführen in die Bohrungen in den Bohrungen gehalten wird. Nur durch die Ausbildung eines definierten Oberflächenreibwerts ist dies gewährleistet. Darüber hinaus ist vorzugsweise die Schlitzzentrierhülse vorzugsweise derart ausgebildet und weist insbesondere einen Oberflächenreibwert derart auf, dass sie im Einsetzzustand, also ohne Einschrauben des Schraubzentrierbolzens, eine Vorspannung auf wenigstens eine der Bohrungen aufbringt und so in dieser Bohrung gehalten wird und vorzugsweise beim Einschrauben des Schraubzentrierbolzens drehungsfrei gehalten wird. Insbesondere bei der Ausbildung eines definierten Oberflächenreibwertes in einem bestimmten Abschnitt an der Schlitzzentrierhülse kann so das drehungsfreie Halten in der Bohrung auch während des Einschraubens des Schraubzentrierbolzens garantiert werden. Variablen zur Festlegung der Vorspannung bzw. der Haltekraft in der Bohrung beim Einschrauben des Schraubzentrierbolzens sind unter anderem die Wandungsstärke der Schlitzhülse, die Schlitzgröße, die Materialbeschaffenheit, die Bohrungsgröße und die Hülsengröße.

Ein solche definierter Oberflächenreibwert kann beispielsweise durch das Aufbringen geeigneter Beschichtungen und insbesondere Nitrocarburieren erreicht werden. Auch können spezielle Schmiermittel oder dergleichen Schmierelemente an der Schlitzzentrierhülse 4 vorgesehen sein. Darüber hinaus ist eine gezielte Oberflächenbehandlung zur Generierung eines definierten Oberflächenreibwerts an der Schlitzzentrierhülse denkbar. Auch ist die Herstellung der Schlitzzentrierhülse wenigstens teilweise aus einem bestimmten Material denkbar, um eine definierte Oberflächenbeschaffenheit und somit einen definierten Oberflächenreibwert zu erzielen.

Auch ist die Vorspannkraft der Hülse vorzugsweise so ausgebildet, dass ein Vorzentrieren und insbesondere ein möglichst genaues Vorzentrieren der einzelnen Lamellen der Lamellenanordnung bzw. der Lamellenanordnung relativ zum Anschlusselement garantiert wird. Dies erleichtert den Zusammenbau und erhöht die axiale Ausrichtung der einzelnen Bauteile relativ zueinander.

Vorzugsweise ist die Schlitzzentrierhülse derart ausgebildet, dass sie in einem Einsetzzustand, in dem sie in die Bohrung des Anschlusselementes und/oder der Lamellenanordnung eingesetzt, aber der Schraubzentrierbolzen noch nicht eingeschraubt ist, einen möglichst geschlossenen Schlitz aufweist. Vorzugsweise ist dieser Schlitz insbesondere in einem Bereich am Ende eines am freien Endbereich der Hülse angeordneten Flansches möglichst vollständig geschlossen. Es hat sich herausgestellt, dass auf diese Weise in die Schlitzzentrierhülse insbesondere beim Zusammenbau eingeleitete Kräfte nahezu verformungsfrei von der Hülse abgetragen werden können.

Vorzugsweise weist das Innengewinde der Schlitzzentrierhülse in einem Einsetzzustand und/oder in einem Einschraubzustand einen Versatz und vorzugsweise einen radialen und/oder axialen Versatz im Bereich des Schlitzes auf. Ein solcher Versatz garantiert u. a. eine sichere Festlegung des Schraubzentrierbolzens im Innengewinde. Dieser Versatz kann sowohl in axialer Richtung der Schlitzzentrierhülse vorliegen, in Form einer "Treppenanordnung" der Gewindegänge links und rechts von diesem Schlitz, es ist jedoch auch ein radialer Versatz denkbar, der beispielsweise durch das ungleichmäßige Reduzieren des Schlitzzentrierhülsendurchmessers in Bezug auf einen Radius links und rechts vom Schlitz erreicht wird. Natürlich ist auch eine Kombination beider Versatzarten denkbar.

Vorzugsweise sind, im Querschnitt der Schlitzzentrierhülse betrachtet, die den Schlitz begrenzenden Mantelflächenkanten der Hülsen eben-parallel zueinander verlaufend ausgebildet. Es hat sich herausgestellt, dass bei einer Verformung des Durchmessers der Schlitzzentrierhülse dann eine besonders sichere Festlegung des Schraubzentrierbolzens in der Schlitzzentrierhülse erfolgt.

Darüber hinaus sei angemerkt, dass die Schlitzzentrierhülse einen oder eine Mehrzahl an Schlitzen aufweisen kann. Auch ist es denkbar, das ein oder mehrere Schlitze von jeweils einem freien Ende in Richtung des anderen freien Endes verlaufen, aber nicht vollständig bis zum freien Ende verlaufen. Vorzugsweise verlaufen sie bis wenigsten zur Mitte der Hülse. Auch kann durch die Wahl der Schlitzausbildung und insbesondere deren Geometrie Einfluss auf die Festlegung in den Bohrungen und die Vor- und End-Zentrierungseigenschaften der Schlitzhülse genommen werden. Insbesondere in diesem Zusammenhang sei angemerkt, dass es beispielsweise denkbar ist, die Schlitzzentrierhülse so auszubilden, dass sie im Bereich der Bohrungen in den Anschlusselementen eine größere Vorspannkraft in die Bohrungen einbringt als dies im Bereich der Lamellenanordnung der Fall ist, und insbesondere in einem Einsetzzustand der Fall ist, also bevor der Schraubzentrierbolzen eingeschraubt ist. Vorzugsweise ist die Schlitzzentrierhülse derart ausgebildet, dass sie insbesondere im Einsetzzustand einen elastischen Formschluss im Bereich der Bohrung des Anschlusselementes und elastisches Spiel im Bereich der Bohrungen der Lammellenanordnung aufweist. Auf diese Weise ist eine Festlegung der Hülse an den Anschlusselementen sichergestellt wobei eine Verformung der Lamellenanordnung insbesondere vor dem Einschrauben des Bolzens verhindert wird. Gerade bei der Ausbildung der Lamellenanordnung aus dünnen Lamellen, können diese ohne Beschädigung einfach mit der Schlitzzentrierhülse gekoppelt bzw. auf dies aufgeschoben werden. Auch ist es denkbar, die Schlitzzentrierhülse so auszuführen, dass sie im Einsetzzustand eine geringere Vorspannkraft und/oder ein größeres Spiel im Bereich der Lamellenanordnung einbringt bzw. aufweist als dies im Bereich des Anschlusselementes der Fall ist.

Dies kann beispielsweise dadurch erreicht werden, dass ein Bereich und insbesondere der Bereich der Schlitzzentrierhülse, der in den Bohrungen der Lamellenanordnung angeordnet ist, eine größere Anzahl an Schlitzen aufweist oder größere Schlitze aufweist, oder eine reduziertere Materialstärke oder ein weicheres Material aufweist oder eine Kombination dieser Anordnungen aufweist, als dies in einem anderen Bereich und insbesondere in dem Bereich der Schlitzzentrierhülse der Fall ist, der im Bereich des Anschlusselementes angeordnet ist

Weitere Ausführungsformen der Erfindung ergeben sich aus den Unteransprüchen.

Im Folgenden wird die Erfindung anhand zweier Ausführungsbeispiele beschrieben, die durch die beiliegenden Zeichnungen näher erläutert sind. Hierbei zeigen schematisch:
- Fig. 1: eine isometrische Darstellung einer Ausführungsform des erfindungsgemäßen Kupplungselementes;
- Fig. 2: eine isometrische Explosionszeichnung der Ausführungsform gemäß Fig. 1;
- Fig. 3: zwei isometrische Darstellungen einer Ausführungsform einer erfindungsgemäßen, in Fig. 1 verwendeten Schlitzzentrierhülse;
- Fig. 4: eine isometrische Ansicht eines Teils des Kupplungselementes gemäß Fig. 1;
- Fig. 5: eine weitere isometrische Explosionszeichnung der Ausführungsform gemäß Fig. 1;
- Fig. 6: einen Querschnitt durch die Ausführungsform gemäß Fig. 1;
- Fig. 7: einen weiteren Querschnitt durch die Ausführungsform gemäß Fig. 1;
- Fig. 8: einen Teilquerschnitt durch die Ausführungsform gemäß Fig. 1;
- Fig. 9: einen Querschnitt durch die Schlitzzentrierhülse gem. Fig. 3;
- Fig. 10: einen Längsschnitt durch die Schlitzzentrierhülse gem. Fig. 3;
- Fig. 11: eine Detailansicht des Querschnitts gemäß Fig. 10; und
- Fig. 12: eine isometrische Explosionszeichnung einer Ausführungsform der erfindungsgemäßen Kupplungsanordnung.

Im Folgenden werden für gleiche und gleich wirkende Bauteile dieselben Bezugsziffern verwendet, wobei bisweilen Hochindizes ihre Anwendung finden.

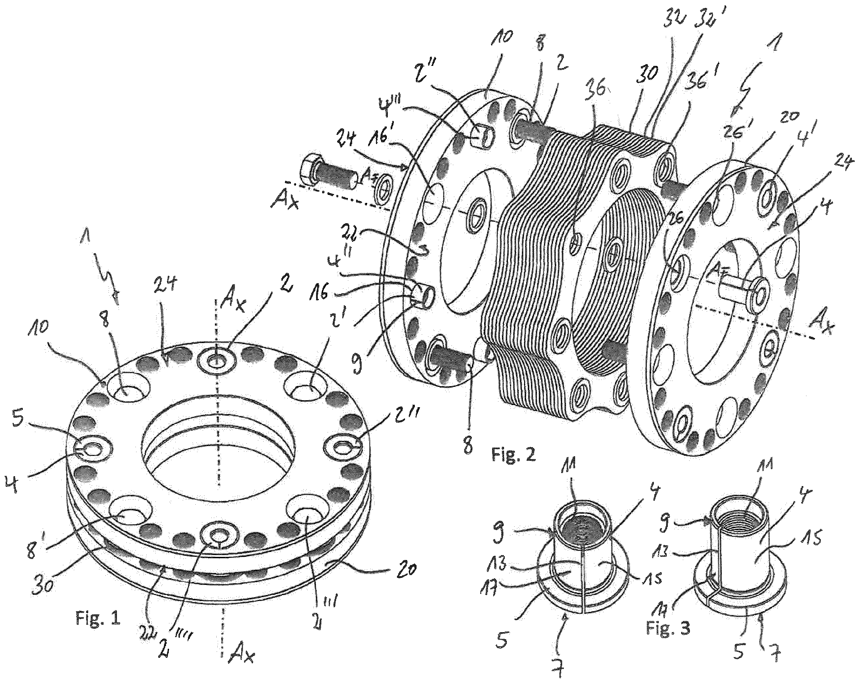

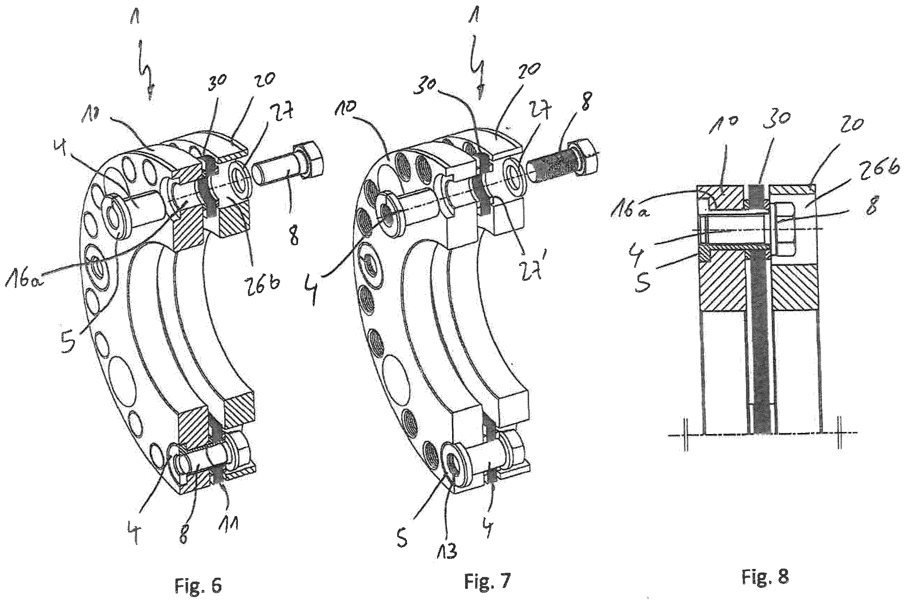

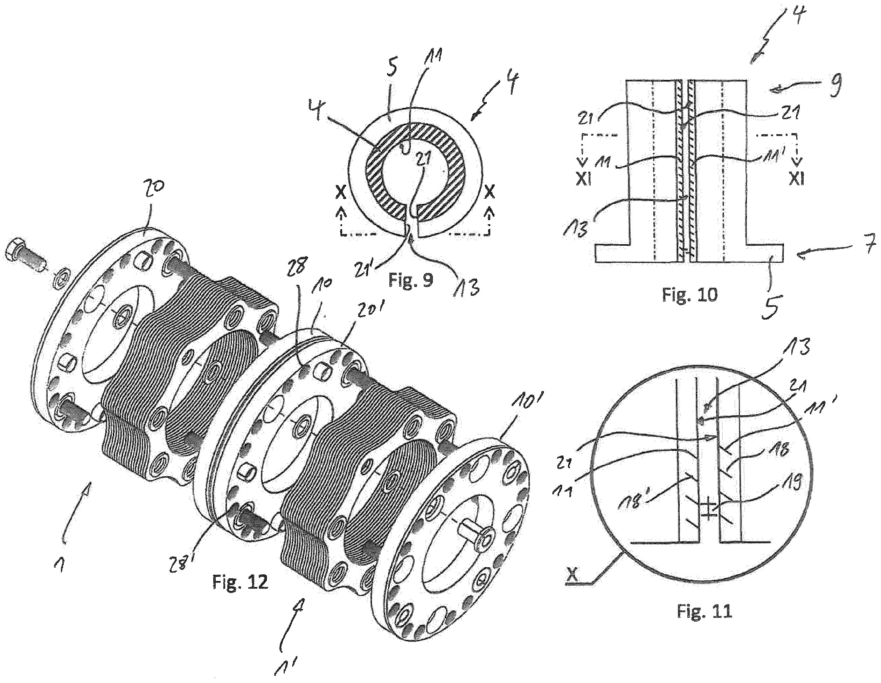

Die Fig. 1, 2, 4 und 5 zeigen Ansichten einer Ausführungsform des erfindungsgemäßen Kupplungselementes 1, während entsprechende Schnitte in den Fig. 6 bis 8 dargestellt sind. Die Fig. 3 und Fig. 9 bis 11 behandeln dagegen eine Schlitzzentrierhülse 4, wie sie bei der Ausführungsform des erfindungsgemäßen Kupplungselementes 1 und bei der in Fig. 12 dargestellten Ausführungsform einer Kupplungsanordnung 40 verwendet werden kann.

Während im Folgenden unterschiedliche Ausführungsformen und Spezifikationen von möglichen Ausführungsformen anhand der Zeichnungen beschrieben werden, sei angemerkt, dass diese Ausführungsformen uns Spezifikationen nicht zwingend alle in Kombination miteinander vorgenommen werden müssen. So ist die Ausbildung eines Kupplungselementes auch ohne oder mit einem Teil der jeweiligen Spezifizierungen möglich, wie sie beispielsweise in den Ansprüchen oder der zuvor genannten Beschreibung erwähnt sind.

Das hier exemplarisch dargestellte Kupplungselement 1 umfasst zwei Anschlusselemente, nämlich ein erstes Anschlusselement 10 und ein zweites Anschlusselement 20, die miteinander über eine Lamellenanordnung 30 drehsteif, aber axial- und winkelbeweglich miteinander verbunden sind. Die hier relevante Achse ist als Achse Aₓ (siehe Fig. 1 und 2) bezeichnet.

Im Detail ist die federelastische Lamellenanordnung 30 über eine Mehrzahl an Befestigungsanordnungen 2 abwechselnd mit dem ersten und dem zweiten Anschlusselement 10,20 verbunden. Auf diese Weise kann das erste Anschlusselement 10 relativ zum zweiten Anschlusselement 20 axial als auch im Winkel zur Achse Aₓ bewegt werden. Bei einer Rotation der Anschlusselemente 10, 20 relativ zueinander um die Achse Aₓ erfolgt jedoch eine nahezu spielfreie Kraftübertragung.

Wenigstens eine Befestigungsanordnung 2 umfasst erfindungsgemäß eine elastische Schlitzzentrierhülse 4, die unter elastischem Formschluss oder elastischem Spiel in komplementäre Bohrungen 16, 26, 36 in einem der beiden Anschlusselemente 10, 20 und in der Lamellenanordnung 30 unter Vorzentrierung des Anschlusselementes relativ zur Lamellenanordnung 30 einführbar ist. Das bedeutet, dass durch das Einsetzen der Schlitzzentrierhülse 4 in die Bohrungen 16, 26 des Anschlusselementes 10 bzw. 20 und die Bohrung 36 der Lamellenanordnung 30 eine relative Vorzentrierung zwischen diesen Bauteilen erzielt wird. Vorzentrierung bedeutet hier beispielsweise eine Festlegung der beiden Bauteile relativ zueinander und/oder eine Grobausrichtung der beiden Bauteile zueinander und/oder eine Feinausrichtung der Bauteile zueinander, insbesondere so, dass die für den Betrieb des Kupplungselementes 1 geforderte Axialausrichtung zwischen Anschlusselement und Lamellenanordnung bereits nahezu oder aber auch vollständig erreicht ist.

Weiter ist ein Schraubzentrierbolzen 8 vorgesehen, der in die Schlitzzentrierhülse 4 unter Festlegung und Endzentrierung des Anschlusselementes 10 bzw. 20 relativ zur Lamellenanordnung 30 einschraubbar bzw. eingeschraubt ist. Auf diese Weise wird ein Kupplungselement 1 gebildet, das sehr einfach montiert und insbesondere aus vorgefertigten Bauteilen montiert werden kann. Darüber hinaus ist durch die Ausbildung der Befestigungsanordnung 2 mittels Schlitzzentrierhülse 4 und Schraubzentrierbolzen 8 eine spielfreie Befestigung der Lamellenanordnung 30 an dem jeweiligen Anschlusselement 10, 20 sichergestellt.

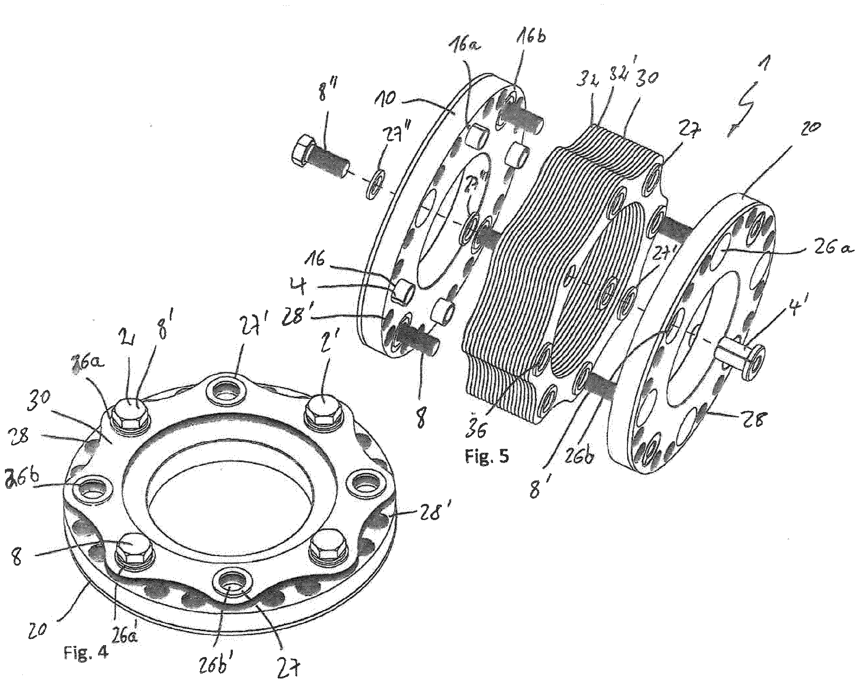

Wie insbesondere in Fig. 2 und 5 erkennbar, ist die Lamellenanordnung 30 vorzugsweise aus einer oder mehreren federelastischen Lamellen 32 zusammengesetzt. Vorzugsweise ist dabei die Schlitzzentrierhülse 4 so ausgebildet, dass sie unter elastischem Formschluss und/oder mit elastischem Spiel in die Bohrungen 36 der Lamellen 32 eingebracht werden kann. Auch hier erfolgt dann vorzugsweise eine Vorzentrierung der einzelnen Lamellen 32 relativ zueinander und/oder vorzugsweise eine Zentrierung der einzelnen Lamellen 32 und der gebildeten Lamellenanordnung 30 relativ zum Anschlusselement 10 bzw. 20.

Wie insbesondere in Fig. 2 erkennbar, umfasst jedes Anschlusselement Bohrungen 6, in die die Schlitzzentrierhülse 4 so eingeführt werden kann, dass ein Flansch 5 der Schlitzzentrierhülse 4 im Wesentlichen oberflächenbündig oder aber versenkt im Anschlusselement 10 bzw. 20 eingesetzt ist. Bei dieser Ausführungsform erfolgt das Einsetzen der Schlitzzentrierhülse über die der Lamellenanordnung 30 abgewandten Seite 24 des Anschlusselementes 10 bzw. 20.

Die Schlitzzentrierhülse 4 ragt dabei vorzugsweise auf der der Lamellenanordnung 30 zugewandten Seite 22 des Anschlusselementes 10 bzw. 20 hervor, so dass die einzelnen Lamellen 32 bzw. die Lamellenanordnung 30 auf dieses freie Ende 9 aufgestülpt werden kann. Es erfolgt eine Vorzentrierung der Lamellenanordnung relativ zum Anschlusselement 10 bzw. 20.

Anschließend kann eine Endzentrierung und/oder eine Festlegung der Lamellenanordnung 30 relativ zum Anschlusselement 10 bzw. 20 durch das Einschrauben des Schraubzentrierbolzens 8 erfolgen.

Bei dieser Ausführungsform (siehe Fig. 2) wird beispielsweise der auf einer Verbindungsachse A_{F} liegende Bolzen 8 durch die Bohrung 36 der Lamellenanordnung 30 geführt und mit der Schlitzhülse 4, die ihrerseits in die Bohrung 26 des Anschlusselementes 20 eingeführt wird, verschraubt. Es kommt so zu einer Festlegung der Lamellenanordnung 30 am Anschlusselement 20 in diesem Bereich. Zum Einführen des Schraubzentrierbolzens 8 weist das andere Anschlusselement 10 bei dieser Ausführungsform eine Bohrung 16' auf, die größer ist als der Kopf des Schraubzentrierbolzens 8, so dass der Schraubzentrierbolzen 8 durch das Anschlusselement 10 durchführbar ist und insbesondere in axialer Richtung als auch radialer Richtung bewegbar bleibt. Auf diese Weise wird die axiale und Winkelbeweglichkeit der beiden Anschlusselement 10, 20 zueinander gewährleistet.

Wie insbesondere in Fig. 3 erkennbar, weist die Schlitzzentrierhülse 4 ein Innengewinde 11 auf, in das der Schraubzentrierbolzen 8 derart einschraubbar ist, dass sich der Durchmesser der Schlitzzentrierhülse erweitert. Dazu weist die Schlitzzentrierhülse 4 wenigstens einen Schlitz 13 auf, der sich von einem freien Ende 7 der Hülse 4 entlang ihrer Mantelfläche 15 und vorzugsweise bis zu einem gegenüberliegenden freien Ende 9 erstreckt. Anstelle dieses einen Schlitzes 13 sind auch eine Mehrzahl von Schlitzen anordbar und insbesondere Schlitze, die sich nur teilweise von den jeweils freien Enden 7, 9 in Richtung auf die anderen freien Ende 9, 7 erstrecken. Auch ist es möglich, an bestimmten Positionen der Schlitzzentrierhülse, beispielsweise im freien Endbereich 9, also dem Endbereich, der hier im Bereich der Lamellenanordnung 30 angeordnet ist (siehe Fig. 2), eine andere Schlitzzentrierhülsengeometrie bzw. -eigenschaft und/oder eine andere oder unterschiedliche Schlitzgeometrien anzubieten, so dass u.a. eine veränderte Vorspannungen, Vorjustierung, Endjustierung etc. auf die Lamellenanordnung 30 und das Anschlusselemente 10 bzw. 20 aufgebracht werden. Neben der gezielten Anordnung der Schlitze kann dazu auch die Materialstärke, die Schlitzgeometrie oder das Material der Hülse 4 an sich verändert werden. Auch ist es denkbar, unterschiedliche Bohrungsdurchmesser in Lamellenanordnung 30 und Anschlusselement 10 bzw. 20 vorzusehen.

Vorzugsweise ist die Schlitzzentrierhülse 4 in einem Pre-Einsetzzustand, indem sie also noch nicht in die Bohrung 16, 26, 36 des Anschlusselementes 10 bzw. 20 und/oder der Lamellenanordnung 30 eingesetzt ist, mit einem geringfügig größeren Durchmesser versehen als die jeweilige Bohrung 16, 26, 36. Durch die elastische Ausbildung der Schlitzhülse kann diese in ihrem Querschnitt reduziert und so dann mit einem reduzierten Durchmesser in die jeweiligen Bohrungen 16, 26, 36 eingeführt werden. Grundsätzlich ist es von Vorteil, die Schlitzzentrierhülse derart elastisch auszubilden, dass sie elastisch auf einen geringeren Durchmesser als den wenigstens der kleinsten Bohrungen 16, 26, 36 verformbar ist.

Vorzugsweise umfasst die Schlitzzentrierhülse 4 wenigstens teilweise einen Abschnitt 17 (siehe Fig. 3) mit einem definierten Oberflächenreibwert. Dieser Oberflächenreibwert ist vorzugsweise so eingestellt, dass die Schlitzzentrierhülse 4 so in der Bohrung 16, 26 und/oder 36 gehalten wird, dass sie beim Einschrauben des Schraubzentrierbolzens 8 drehfest gehalten wird. Auf diese Weise ist kein Kontern der Schlitzzentrierhülse 4 nötig, um den Schraubzentrierbolzen 8 einzuschrauben. Dies erlaubt insbesondere eine sehr flache Ausführung des Kupplungselementes 1 und insbesondere den Verbau des Kupplungselementes 1 derart, dass kein Zugang mit einem Werkzeug zu der Seite 24 möglich ist, von der die Schlitzzentrierhülsen 4 eingesetzt werden. Er ist dann schlichtweg nicht nötig. Auf diese Weise kann dann beispielsweise eine Kupplungsanordnung 40 gem. Fig. 12 hergestellt werden, bei der ohne Zwischenelement ein Anschlusselement 10 eines ersten Kupplungselementes 1 direkt mit dem Anschlusselement 20' eines zweiten Kupplungselementes 1' verbunden ist.

Vorzugsweise und wie insbesondere in Fig. 2 dargestellt, ist die Schlitzzentrierhülse 4 derart ausgebildet, dass sie in einem Einsetzzustand, in dem sie in die Bohrung 16, 26, 36 des Anschlusselementes 10, 20 und/oder der Lamellenanordnung 30 eingesetzt ist, in den aber der Schraubzentrierbolzen 8 noch nicht eingeschraubt ist, eine nahezu und insbesondere zumindest im Bereich des am freien Ende 7 der Hülse 4 angeordneten Flansches 5 vollständig geschlossenen Schlitz 13 aufweist.

In Fig. 2 ist dies beispielsweise bei der mit dem Bezugszeichen 4" bezeichneten Schlitzzentrierhülse zu sehen, die im Gegensatz zu der noch nicht eingeführten Schlitzzentrierhülse 4 einen geringeren Schlitz 13 insbesondere im Bereich des Flansches 5 aufweist.

Fig. 4 zeigt eine Detailansicht der insbesondere in Fig. 1 dargestellten Ausführungsform des erfindungsgemäßen Kupplungselementes 1, wobei hier nur das zweite Anschlusselement 20 dargestellt ist, das mit der Lamellenanordnung 30 über die Befestigungsanordnungen 2 verbunden ist. Das in den anderen Figuren dargestellt Anschlusselement 10 ist hier nicht dargestellt.

Erkennbar ist die Festlegung der Lamellenanordnung 30 über die Befestigungsanordnung 2 an allen "zweiten Bohrungen" in der Lamellenanordnung bzw. des Anschlusselementes 20, also allen geraden Bohrungen, die hier mit dem Bezugszeichen 26a bezeichnet sind.

Über alle ungeraden Bohrungen, hier bezeichnet mit den Bezugszeichen 26b kann das hier dargestellte Paket aus zweitem Anschlusselement 20 und Lamellenanordnung 30 mit dem ersten Anschlusselement 10 (siehe beispielsweise Fig. 5) verbunden werden.

Wie insbesondere in den Fig. 4 und 5 dargestellt, umfasst das Kupplungselement 1 vorzugsweise eine Mehrzahl an Distanzelementen 27, die im Bereich der Bohrungen 16a, 26a, 36 bzw. 16b, 26b, 30 der Anschlußelemente und Lamellenanordnung 30 angeordnet sind und einen Abstand zwischen diesen Bauteilen garantieren. Die Anschlusselemente 10, 20 weisen (siehe Fig. 4 und 5) darüber hinaus Befestigungsanordnungen 28 auf, die der Festlegung der jeweiligen Anschlusselemente an weiteren Maschinenteilen (nicht dargestellt) und, wie im Folgenden noch näher beschrieben, an anderen Kupplungselementen oder dergleichen Bauteile dienen.

Die Fig. 9 bis 11 zeigen Schnitte und Detailschnitte einer möglichen Ausführungsform der bei dem Kupplungselement 1 verwendeten Schlitzzentrierhülse 4. Wie bereits erläutert, weist die Schlitzzentrierhülse 4 vorzugsweise einen Flansch 5 auf, der an einem freien Ende 7 der Schlitzzentrierhülse 4 angeordnet ist. Bei dieser Ausführungsform weist das andere freie Ende 9 keinen solchen Flansch auf, damit ein Einführen der Schlitzzentrierhülse 4 in die Bohrungen 16, 26, 36 (siehe beispielsweise Fig. 2) des Kupplungselementes 1 möglich ist. Darüber hinaus kann an diesem freien Ende 9 auch ein Einführkopf, beispielsweise eine Abschrägung des freien Endes 9, zum einfachen Einführen der Schlitzzentrierhülse in die Bohrungen 16, 26, 36 vorgesehen sein.

Weiter weist die Schlitzzentrierhülse 4 den Schlitz 13 auf, der ein elastisches Aufweiten und/oder Reduzieren des Durchmessers der Schlitzzentrierhülse 4 erlaubt.

Vorzugsweise ist dabei der Schlitz 13, wie beispielsweise in Fig. 9 dargestellt, so ausgeführt, dass die den Schlitz 13 begrenzenden Mantelflächenkanten 21 ebenen-parallel zueinander verlaufend ausgebildet sind.

Weiter vorzugsweise ist das Innengewinde 11 der Schlitzzentrierhülse 4 (siehe beispielsweise Fig. 10 und 11) im zuvor behandelten Einsetzzustand und/oder im zuvor behandelten Einschraubzustand mit einem Versatz 19 im Bereich des Schlitzes 13 versehen. Dieser Versatz 19 des Gewindes 11 ist im Detail in Fig. 11 dargestellt, das einen Ausschnitt des Gewindes gemäß Fig. 10 zeigt. Der Versatz 19 äußert sich dadurch, dass die einzelnen Gewindegänge 18 des Gewindes im Bereich des Schlitzes nicht linear, sondern versetzt ineinander übergehen, wenn der Schlitz 13 vollständig geschlossen ist.

Auf diese Weise kommt es zu einer Zwängung im Gewindegang beim Einschrauben des Schraubzentrierbolzens 8 und zu einer Sicherung desselben im eingeschraubten Zustand.

Fig. 12 zeigt eine isometrische Darstellung einer Ausführungsform der erfindungsgemäßen Kupplungsanordnung 40, umfassend wenigstens zwei Kupplungselemente bzw. 1', wie sie beispielsweise in den Fig. 1 und 2 dargestellt sind. Zur Festlegung der Kupplungselemente 1 bzw. 1' untereinander sind zwei Anschlusselemente 10, 20 miteinander über die bereits erwähnten, an den Anschlusselementen vorgesehenen Befestigungsanordnungen 28 und beispielsweise über Bolzenverbindungen miteinander verbunden. Es ist jedoch auch möglich, die beiden Kupplungselemente 1, 1' über ein Versatzstück, beispielsweise eine Welle, zu verbinden, die dann entsprechend an den Anschlusselementen 10, 20' festgelegt wird und so eine Verbindung der beiden Kupplungselemente 1, 1' miteinander erlaubt.

In der vorhergehenden Spezifikation wurde die Erfindung in Bezug auf eine spezifische Ausführungsform der Erfindung beschrieben. Es ist jedoch offensichtlich, dass verschiedene Modifikationen und Änderungen daran vorgenommen werden können ohne vom breiteren Gedanken und Umfang der Erfindung, wie sie in den angehängten Ansprüchen beschrieben ist, abzuweichen.

Es sind aber auch andere Modifizierungen, Varianten und Alternativen möglich. Dementsprechend sind die Spezifikationen, Zeichnungen und Beispiele in einem illustrativen statt einem einschränkenden Sinn zu betrachten.

In den Ansprüchen sind Referenzzeichen zwischen Klammern nicht dahingehend auszulegend, dass sie den Anspruch eingrenzen. Das Wort 'umfassend' schließt die Anwesenheit anderer Merkmale oder Schritte als die in einem Anspruch ausgeführten nicht aus. Außerdem sind die Wörter 'ein', 'eine' und 'eines' nicht als einschränkend auf 'nur ein' aufzufassen sondern werden verwendet, um 'mindestens ein' zu bedeuten und schließen eine Mehrheit nicht aus. Die reine Tatsache, dass bestimmte Maße in voneinander verschiedenen Ansprüchen angegeben sind, bedeutet nicht, dass eine Kombination dieser Maße nicht vorteilhaft verwendet werden kann.

Obwohl unterschiedliche Ausführungsformen der vorliegenden Erfindung oben beschrieben wurden, teils unter Bezugnahme auf die beiliegenden Zeichnungen teils in genereller Form, versteht es sich, dass die Erfindung nicht auf diese Ausführungsformen beschränkt ist. Verweise in dieser Spezifikation auf "die Ausführungsform" oder "eine Ausführungsform" bedeuten, dass ein bestimmtes Merkmal, eine bestimmte Struktur oder eine bestimmte Eigenschaft, beschrieben in Zusammenhang mit der Ausführungsform, in mindestens eine Ausführungsform der vorliegenden Erfindung einbezogen ist. Also verweist das Erscheinungsbild der Sätze "in die Ausführungsform" oder "in einer Ausführungsform" an verschiedenen Stellen in dieser Beschreibung nicht zwangsläufig auf ein und dieselbe Ausführungsform. Ferner ist festzuhalten, dass bestimmte Merkmale, Strukturen oder Eigenschaften von einer oder mehreren Ausführungsformen in jeder geeigneten Weise kombiniert oder entfernet werden können, um neue, nicht ausdrücklich beschriebene Ausführungsformen zu bilden.

### Bezugszeichen

- 1: Kupplungselement
- 2: Befestigungsanordnung
- 4: Schlitzzentrierhülse
- 5: Flansch
- 7: freies Ende
- 8: Schraubzentrierbolzen
- 9: freies Ende
- 10: Erstes Anschlusselement
- 11: Innengewinde
- 13: Schlitz
- 15: Mantelfläche
- 16: Bohrung
- 16a, 16b: Bohrung
- 17: Abschnitt mit definiertem Oberflächenreibwert
- 19: Versatz
- 20: Zweites Anschlusselement
- 21: Mantelflächenkante
- 22: Zugewandte Seite
- 24: Abgewandte Seite
- 26: Bohrung
- 26a, 26b: Bohrung
- 27: Distanzelement
- 28: Befestigungsanordnung
- 30: Lamellenanordnung
- 32: Lamelle
- 36: Bohrung
- 40: Kupplungsanordnung
- Aₓ: Achse
- A_{F}: Achse

## Patentansprüche

1. Kupplungselement (1) zur axialen Drehmomentübertragung, mit wenigstens einem ersten (10) und einem zweiten Anschlusselement (20) zum Anschluss drehbarer Maschinenteile, beispielsweise von passiven und aktiven Antriebswellen oder von Anschlusselementen weiterer Kupplungselemente (100), und einer axial zwischengeordneten federelastischen Lamellenanordnung (30), die über eine Mehrzahl an Befestigungsanordnungen (2) abwechselnd mit dem ersten (10) und zweiten Anschlusselement (20) verbunden ist, so dass die Anschlusselemente (10; 20) drehsteif aber axial- und winkelbeweglich miteinander verbunden sind, wobei die Lamellenanordnung (30) aus mehreren federelastischen Lamellen (32) zusammengesetzt ist,
**dadurch gekennzeichnet, dass**
wenigstens eine Befestigungsanordnung (2) eine Schlitzzentrierhülse (4) umfasst, die unter elastischem Formschluss und/oder vorzugsweise elastischem Spiel in komplementäre Bohrungen (16, 26, 36) in einem der beiden Anschlusselemente (10; 20) und in der Lamellenanordnung (30) unter Vorzentrierung des Anschlusselements (10; 20) relativ zur Lamellenanordnung (30) und unter Vorzentrierung der einzelnen Lamellen (36) relativ zueinander eingeführt ist, und weiter einen Schraubzentrierbolzen (8) umfasst, der in die Schlitzzentrierhülse (4) unter Festlegung und Endzentrierung des Anschlusselementes (10; 20) relativ zur Lamellenanordnung (30) eingeschraubt ist.

2. Kupplungselement nach Anspruch 1,
**dadurch gekennzeichnet, dass**
die Schlitzzentrierhülse (4) und der Schraubzentrierbolzen (8) derart ausgebildet sind, dass die Schlitzzentrierhülse (4) beim Eischrauben des Schraubzentrierbolzens (8) durch die Gewindegangpressung vorzugsweise elastisch aufgeweitet wird und/oder in einem Einschraubzustand, in dem der Schraubzentrierbolzen (8) eingeschraubt ist, endzentriert unter Formschluss in den Bohrungen (16, 26, 36) festgelegt ist und so die Lamellenanordnung (30) relativ zum jeweiligen Anschlusselement (10, 20) fixiert.

3. Kupplungselement nach Anspruch 1 oder 2,
**dadurch gekennzeichnet, dass**
die Schlitzzentrierhülse (4) unter elastischem Formschluss und/oder mit vorzugsweise elastischem Spiel in Bohrungen (36) der Lamellen (32) unter Vorzentrierung der einzelnen Lamellen (36) relativ zum Anschlusselement (10; 20) einführbar ist.

4. Kupplungselement nach einem der vorhergehenden Ansprüche,
**dadurch gekennzeichnet, dass**
die Schlitzzentrierhülse (4) einen Flansch (5) insbesondere an einem freien Endbereich (7) der Hülse (4) umfasst.

5. Kupplungselement nach einem der vorhergehenden Ansprüche,
**dadurch gekennzeichnet, dass**
die Schlitzzentrierhülse (4) ein Innengewinde (11) aufweist, das sich vorzugsweise im Wesentlichen über mehr als die Hälfte der Länge und besonders bevorzugst vollständig über die gesamte Länge der Schlitzzentrierhülse (4) erstreckt.

6. Kupplungselement nach einem der vorhergehenden Ansprüche,
**dadurch gekennzeichnet, dass**
die Schlitzzentrierhülse (4) wenigstens einen Schlitz (13) umfasst, der sich von einem freien Ende (7) der Hülse (4) entlang ihrer Mantelfläche (15) und vorzugsweise bis zu einem gegenüberliegenden freien Ende (9) erstreckt.

7. Kupplungselement nach einem der vorhergehenden Ansprüche,
**dadurch gekennzeichnet, dass**
die Schlitzzentrierhülse (4) in einem Pre-Einsetzzustand, in dem sie noch nicht in die Bohrung (6; 36) des Anschlusselementes (10; 20) und/oder der Lamellenanordnung (30) eingesetzt ist, einen geringfügig größeren Durchmesser aufweist als die jeweilige Bohrung (6; 36), und/oder vorzugsweise elastisch auf einen geringen Durchmesser als den der kleinsten Bohrungen verformbar ist.

8. Kupplungselement nach einem der vorhergehenden Ansprüche,
**dadurch gekennzeichnet, dass**
die Schlitzzentrierhülse (4) wenigstens teilweise einen Abschnitt (17) mit einem definierten Oberflächenreibwert umfasst.

9. Kupplungselement nach einem der vorhergehenden Ansprüche,
**dadurch gekennzeichnet, dass**
die Schlitzzentrierhülse (4) derart elastisch ausgebildet ist, dass sie im Einsetzzustand eine Vorspannung auf wenigstens eine der Bohrungen (16, 26, 36) aufbringt und so in der Bohrung (6, 36) gehalten wird und vorzugsweise beim Einschrauben des Schraubzentrierbolzens (8) drehungsfrei gehalten wird.

10. Kupplungselement nach einem der vorhergehenden Ansprüche , insbesondere einem der Ansprüche 6 - 9,
**dadurch gekennzeichnet, dass**
die Schlitzzentrierhülse (4) derart ausgebildet ist, dass sie in einem Einsetzzustand, in dem sie in die Bohrung (6, 36) des Anschlusselementes (10; 20) und/oder der Lamellenanordnung (30) eingesetzt aber der Schraubzentrierbolzen (8) noch nicht eingeschraubt ist, einen nahezu und insbesondere zumindest im Bereich eines am freien Endbereich (7) der Hülse (4) angeordneten Flansches (5) vollständig geschlossen Schlitz (13) aufweist.

11. Kupplungselement nach einem der vorhergehenden Ansprüche , insbesondere einem der Ansprüche 5 - 10,
**dadurch gekennzeichnet, dass**
das Innengewinde (11) der Schlitzzentrierhülse (4) in einem Einsetzzustand und/oder in einem Einschraubzustand einen Versatz (19) im Bereich des Schlitzes (13) aufweist.

12. Kupplungselement nach einem der vorhergehenden Ansprüche , insbesondere einem der Ansprüche 6 - 11,
**dadurch gekennzeichnet, dass**
im Querschnitt der Schlitzzentrierhülse (4) betrachtet, die den Schlitz (13) begrenzenden Mantelflächenkanten (21) der Hülse (4) nicht ebenen-parallel zueinander verlaufend ausgebildet sind.

13. Kupplungsanordnung umfassend wenigstens zwei Kupplungselemente (1) nach einem der vorhergehenden Ansprüche, die über wenigstens jeweils eines ihrer Anschlusselemente (10,20) vorzugsweise unter Zwischenschaltung eines Zwischenelementes miteinander kraftgekoppelt sind.

14. Lamellenanordnung zur Anwendung mit einem Kupplungselement (1) nach einem der vorhergehenden Ansprüche, umfassend eine Mehrzahl an federelastischen Lamellen (32) und eine Mehrzahl an Schlitzzentrierhülsen (4), die unter elastischem Formschluss und insbesondere mit elastischem Spiel in Bohrungen (36) in den Lamellen (32) unter Vorzentrierung der einzelnen Lamellen (32) relativ zueinander eingeführt oder einführbar sind.

## Claims

1. Clutch element (1) for the axial transmission of torque, having at least a first (10) and a second connector element (20) for connecting rotatable machine parts, for example passive and active drive shafts or connector elements of further clutch elements (100), and an elastomeric multiple disc arrangement (30) which is arranged axially therebetween and is connected via a plurality of fastening elements (2) alternately to the first (10) and second connector element (20), such that the connector elements (10; 20) are connected to one another in a torsionally rigid but axially and angularly movable manner, wherein the multiple disc arrangement (30) is composed of a plurality of elastomeric discs (32), **characterised in that** at least one fastening element (2) comprises a slot centring sleeve (4) which is introduced under elastic form fit and/or preferably with elastic play into complementary holes (16, 26, 36) in one of the two connector elements (10; 20) and in the multiple disc arrangement (30) with pre-centring of the connector element (10; 20) relative to the multiple disc arrangement (30) and with pre-centring of the individual discs (36) relative to one another, and further comprises a screw centring bolt (8) which is screwed into the slot centring sleeve (4) with determination and final centring of the connector element (10; 20) relative to the multiple disc arrangement (30).

2. Clutch element according to Claim 1, **characterised in that** the slot centring sleeve (4) and the screw centring bolt (8) are formed such that the slot centring sleeve (4) is preferably elastically expanded by the thread pressing when screwing the screw centring bolt (8) and/or in a screwed state, in which the screw centring bolt (8) is screwed, is fixed, finally centred under form fit in the holes (16, 26, 36) and thus fixes the multiple disc arrangement (30) relative to each connector element (10, 20).

3. Clutch element according to Claim 1 or 2, **characterised in that** the slot centring sleeve (4) can be inserted under elastic form fit and/or preferably with elastic play into holes (36) of the discs (32) with pre-centring of the individual discs relative to the connector element (10; 20).

4. Clutch element according to any one of the preceding claims, **characterised in that** the slot centring sleeve (4) comprises a flange (5), in particular on a free end region (7) of the sleeve (4).

5. Clutch element according to any one of the preceding claims, **characterised in that** the slot centring sleeve (4) has an inner winding (11) which preferably substantially extends over more than half of the length and particularly preferably extends completely over the entire length of the slot centring sleeve (4).

6. Clutch element according to any one of the preceding claims, **characterised in that** the slot centring sleeve (4) comprises at least one slot (13), which extends from a free end (7) of the sleeve (4) along its sleeve surface (15) and preferably extends to an opposing free end (9).

7. Clutch element according to any one of the preceding claims, **characterised in that** the slot centring sleeve (4), in a pre-inserted state, in which it is not yet inserted into the hole (6; 36) of the connector element (10; 20) and/or the multiple disc arrangement (30), has a slightly greater diameter than that of the respective hole (6; 36), and/or can preferably be elastically deformed to a small diameter as that of the smallest holes.

8. Clutch element according to any one of the preceding claims, **characterised in that** the slot centring sleeve (4) at least partially comprises a section (17) with a defined surface friction coefficient.

9. Clutch element according to any one of the preceding claims, **characterised in that** the slot centring sleeve (4) is formed elastically such that in the inserted position it applies a pretension to at least one of the holes (16, 26, 36) and is thus held in the hole (6, 36) and preferably held in a rotation-free manner when screwing the screw centring bolt (8).

10. Clutch element according to any one of the preceding claims, in particular one of Claims 6 - 9, **characterised in that** the slot centring sleeve (4) is formed such that in an inserted state, in which it is inserted into the hole (6, 36) of the connector element (10; 20) and/or the multiple disc arrangement (30) but the screw centring bolt (8) is not yet screwed, it has an almost, and in particular at least in the region of the flange (5) arranged on the free end region (7) of the sleeve (4), completely closed slot (13).

11. Clutch element according to any one of the preceding claims, in particular one of Claims 5 - 10, **characterised in that** the inner winding (11) of the slot centring sleeve (4), in an inserted state and/or in a screwed state, has an offset (19) in the region of the slot (13).

12. Clutch element according to any one of the preceding claims, in particular one of Claims 6 - 11, **characterised in that** observed in the cross-section of the slot centring sleeve (4), the outer surface edges (21) of the sleeve (4) delimiting the slot (13) are not formed to be running plane-parallel to one another.

13. Clutch arrangement comprising at least two clutch elements (1) according to any one of the preceding claims, which are preferably each physically coupled to one another via at least one of their respective connector elements (10, 20), preferably under interposition of an intermediary element.

14. Multiple disc arrangement for use with a clutch element (1) according to any one of the preceding claims, comprising a plurality of elastomeric discs (32) and a plurality of slot centring sleeves (4) which can be introduced or inserted under elastic form fit and in particular with elastic play into holes (36) in the discs (32) with pre-centring of the individual discs (32) relative to one another.

## Revendications

1. Elément d'accouplement (1) pour la transmission axiale de couple, comprenant au moins un premier (10) et un deuxième élément de raccordement (20) pour le raccordement de pièces de machine rotatives, par exemple d'arbres d'entrainement passifs et actifs ou d'éléments de raccordement d'autres éléments d'accouplement (100), et comprenant également un ensemble de lamelles (30) élastiquement déformable agencé axialement entre lesdits éléments de raccordement, qui est relié, par l'intermédiaire d'une pluralité d'agencements de fixation (2), alternativement au premier (10) et au deuxième élément de raccordement (20), de sorte que les éléments de raccordement (10 ; 20) sont reliés mutuellement de manière rigide en rotation mais mobile axialement et angulairement, l'ensemble de lamelles (30) étant composé par la réunion de plusieurs lamelles (32) élastiquement flexibles,
**caractérisé**
**en ce qu'**au moins un agencement de fixation (2) comprend une douille de centrage fendue (4), qui est insérée, en réalisant une liaison élastique par complémentarité de formes et/ou de préférence un jeu élastique, dans des alésages complémentaires (16, 26, 36) dans l'un des deux éléments de raccordement (10 ; 20) et dans l'ensemble de lamelles (30), en produisant un pré-centrage de l'élément de raccordement (10 ; 20) par rapport à l'ensemble de lamelles (30) et en produisant un pré-centrage des lamelles individuelles (36) les unes par rapport aux autres, et comprend par ailleurs, une vis de centrage filetée (8), qui est vissée dans la douille de centrage fendue (4) en produisant la fixation et le centrage final de l'élément de raccordement (10 ; 20) par rapport à l'ensemble de lamelles (30).

2. Elément d'accouplement selon la revendication 1,
**caractérisé**
**en ce que** la douille de centrage fendue (4) et la vis de centrage filetée (8) sont configurées de manière telle, que la douille de centrage fendue (4) soit de préférence soumise à une expansion élastique par la pression du pas de vis lors du vissage de la vis de centrage filetée (8), et/ou soit, dans un état vissé dans lequel la vis de centrage filetée (8) est vissée, fixée dans les alésages (16, 26, 36) en étant centrée de manière finale et en réalisant une liaison par complémentarité de formes, tout en fixant ainsi l'ensemble de lamelles (30) par rapport à l'élément de raccordement (10, 20) respectif.

3. Elément d'accouplement selon la revendication 1 ou la revendication 2,
**caractérisé**
**en ce que** la douille de centrage fendue (4) peut être insérée en réalisant une liaison élastique par complémentarité de formes et/ou avec un jeu de préférence élastique, dans des alésages (36) des lamelles (32), en produisant un pré-centrage des lamelles (32) individuelles par rapport à l'élément de raccordement (10 ; 20).

4. Elément d'accouplement selon l'une des revendications précédentes,
**caractérisé**
**en ce que** la douille de centrage fendue (4) comporte une collerette (5), notamment au niveau d'une zone d'extrémité libre (7) de la douille (4).

5. Elément d'accouplement selon l'une des revendications précédentes,
**caractérisé**
**en ce que** la douille de centrage fendue (4) présente un filetage intérieur (11), qui s'étend de préférence sensiblement sur plus de la moitié de la longueur, et de manière particulièrement préférée, sur la totalité de la longueur de la douille de centrage fendue (4).

6. Elément d'accouplement selon l'une des revendications précédentes,
**caractérisé**
**en ce que** la douille de centrage fendue (4) comporte au moins une fente (13), qui s'étend à partir d'une extrémité libre (7) de la douille (4), le long de sa surface périphérique (15), et de préférence jusqu'à une extrémité libre (9) opposée.

7. Elément d'accouplement selon l'une des revendications précédentes,
**caractérisé**
**en ce que** la douille de centrage fendue (4) présente, dans un état de pré-insertion dans lequel elle n'est pas encore insérée dans l'alésage (6 ; 36) de l'élément de raccordement (10 ; 20) et/ou de l'ensemble de lamelles (30), un diamètre légèrement plus grand que l'alésage (6 ; 36) respectif, et/ou peut de préférence être déformée de manière élastique à un diamètre moindre que celui des alésages les plus petits.

8. Elément d'accouplement selon l'une des revendications précédentes,
**caractérisé**
**en ce que** la douille de centrage fendue (4) comprend au moins un tronçon (17) avec un coefficient de frottement de surface défini.

9. Elément d'accouplement selon l'une des revendications précédentes,
**caractérisé**
**en ce que** la douille de centrage fendue (4) est d'une configuration élastique telle, qu'elle exerce, dans l'état inséré, une précontrainte sur l'un au moins des alésages (16, 26, 36), et soit ainsi maintenue dans l'alésage (6, 36), et de préférence maintenue exempte de rotation lors du vissage de la vis de centrage filetée (8).

10. Elément d'accouplement selon l'une des revendications précédentes, notamment selon l'une des revendications 6 - 9,
**caractérisé**
**en ce que** la douille de centrage fendue (4) est réalisée de manière à présenter, dans un état d'insertion dans lequel elle est insérée dans l'alésage (6, 36) de l'élément de raccordement (10 ; 20) et/ou de l'ensemble de lamelles (30) mais dans lequel la vis de centrage filetée (8) n'y a pas encore été vissée, une fente (13) pratiquement fermée, et notamment totalement fermée, au moins dans la zone d'une collerette (5) agencée à l'extrémité libre (7) de la douille (4).

11. Elément d'accouplement selon l'une des revendications précédentes, notamment selon l'une des revendications 5 - 10,
**caractérisé**
**en ce que** le filetage intérieur (11) de la douille de centrage fendue (4) présente, dans un état d'insertion et/ou dans un état de vissage, un décalage (19) réciproque dans la zone de la fente (13).

12. Elément d'accouplement selon l'une des revendications précédentes, notamment selon l'une des revendications 6 - 11,
**caractérisé**
**en ce que** vu en section transversale de la douille de centrage fendue (4), les bords de surface périphérique (21) de la douille (4), qui délimitent la fente (13), sont réalisés de manière à ce que leurs plans ne s'étendent par parallèlement l'un à l'autre.

13. Agencement d'accouplement comprenant au moins deux éléments d'accouplement (1) selon l'une des revendications précédentes, qui sont accouplés l'un à l'autre respectivement par l'intermédiaire d'au moins l'un de leurs éléments de raccordement (10, 20), de préférence avec interposition d'un élément intermédiaire.

14. Ensemble de lamelles destiné à une utilisation avec un élément d'accouplement (1) selon l'une des revendications précédentes, comprenant une pluralité de lamelles (32) élastiquement flexibles et une pluralité de douilles de centrage fendues (4), qui sont insérées ou peuvent être insérées, en produisant une liaison par complémentarité de formes et notamment avec un jeu élastique, dans des alésages (36) dans les lamelles (32), en réalisant un pré-centrage des lamelles individuelles (32) les unes par rapport aux autres.
